(19) Europäisches Patentamt
European Patent Office
Office européen des brevets

(11) Veröffentlichungsnummer: **0 087 054**
**A1**

(12) # EUROPÄISCHE PATENTANMELDUNG

(21) Anmeldenummer: 83101162.2

(22) Anmeldetag: 08.02.83

(51) Int. Cl.³: **A 01 N 43/64**
//(A01N43/64, 37/24)

(30) Priorität: 20.02.82 DE 3206234

(43) Veröffentlichungstag der Anmeldung:
31.08.83 Patentblatt 83/35

(84) Benannte Vertragsstaaten:
AT BE CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Schmidt, Robert R., Dr.
Im Waldwinkel 110
D-5060 Bergisch-Gladbach 2(DE)

(72) Erfinder: Gauss, Walter, Dr.
Ludwig-Aschoff-Strasse 4
D-5000 Köln 80(DE)

(72) Erfinder: Draber, Wilfried, Dr.
In den Birken 81
D-5600 Wuppertal 1(DE)

(54) **Selektives Rübenherbizid enthaltend Metamitron in Kombination mit bestimmten Naphthochinonderivaten.**

(57) Die neuen, synergistischen Wirkstoffkombinationen bestehend aus

(1) 4-Amino-3-methyl-6-phenyl-1,2,4-triazin-5(4H)-on (Metamitron) der Formel I

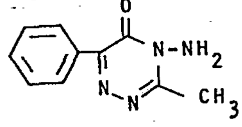

(I)

und

(2) einem 2-Acylamido-3-isopropylamino-1,4-naphthochinon der Formel II

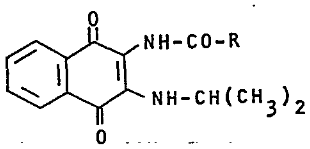

(II)

worin R für $CH_3$ oder $C_2H_5$ steht,
können zur selektiven Unkrautbekämpfung in Rübenkulturen verwendet werden, wobei auch sonst schwer bekämpfbare Unkräuter wie Galium und Mercurialis sicher miterfaßt werden.

EP 0 087 054 A1

BAYER AKTIENGESELLSCHAFT    5090 Leverkusen, Bayerwerk

Zentralbereich
Patente, Marken und Lizenzen    Bi/Kü-c
III

Selektives Rübenherbizid enthaltend Metamitron in Kombination mit bestimmten Naphthochinonderivaten

Die Erfindung betrifft neue herbizide, synergistische Wirkstoffkombinationen, die aus Metamitron und bestimmten bekannten Naphthochinonderivaten bestehen und zur Verwendung als selektive Rübenherbizide ganz besonders geeignet sind.

Es ist bereits bekannt geworden, daß 4-Amino-3-methyl-6-phenyl-1,2,4-triazin-5(4H)-on (Metamitron) herbizid wirksam ist (vgl. DE-OS 22 24 161; US-PS 3 847 914). Der Wirkstoff Metamitron ist bei sehr guter herbizider Wirkung selektiv in Zuckerrüben einsetzbar und hat in dieser Indikation praktische Bedeutung erlangt.

Gegen bestimmte Unkräuter ist die Wirkung des Metamitron aber nicht immer ausreichend. So wird Galium aparine nur bei erhöhten Dosierungen bekämpft und Mercurialis annua praktisch gar nicht.

Ferner ist bekannt, daß bestimmte Naphthochinonderivate, z.B. 2-Acetamido-3-isopropylamino-1,4-naphthochinon und 2-Propionamido-3-isopropylamino-1,4-naphthochinon, herbizide Eigenschaften besitzen (vgl. DE-OS 20 49 468). Eine Wirksamkeit dieser Naphthochinonderivate gegen die vorgenannten Problemunkräuter, insbesondere gegen Mercurialis, war nicht bekannt.

Es wurde nun überraschend gefunden, daß 2-Acetamido-3-isopropylamino-1,4-naphthochinon und 2-Propionamido-3-isopropylamino-1,4-naphthochinon eine ausgeprägte Bekämpfungswirkung gegen Mercurialis annua besitzen.

Weiterhin wurde gefunden, daß die neuen Wirkstoffkombinationen bestehend aus

(1) 4-Amino-3-methyl-6-phenyl-1,2,4-triazin-5(4H)-on (Metamitron) der Formel I

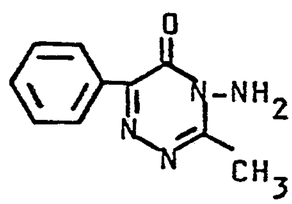

(I)

und

(2) einem 2-Acylamido-3-isopropylamino-1,4-naphthochinon der Formel II

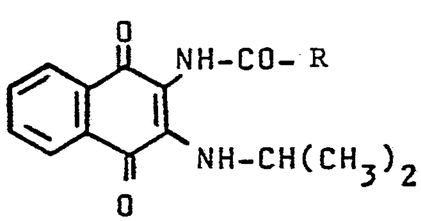

(II)

worin R für $CH_3$ (IIa) oder $C_2H_5$ (IIb) steht,

eine besonders hohe herbizide Wirksamkeit aufweisen, ohne Rübenkulturen zu schädigen.

Überraschenderweise ist die herbizide Wirkung der erfindungsgemäßen Wirkstoffkombinationen wesentlich höher als die Summe der Wirkungen der einzelnen Wirkstoffe. Es liegt ein nicht vorhersehbarer echter synergistischer Effekt vor und nicht nur eine Wirkungsergänzung. Dies zeigt sich insbesondere bei den sonst schwer bekämpfbaren Unkräutern wie Galium und Mercurialis, die von den Wirkstoffkombinationen sicher mitbekämpft werden.

Andere Unkräuter und Ungräser, die im allgemeinen in Rübenkulturen vorkommen und durch die erfindungsgemäßen Wirkstoffkombinationen sicher bekämpft werden, sind beispielsweise <u>dikotyle Unkräuter</u> der Gattungen:

Sinapis, Lepidium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea; ferner

<u>monokotyle Unkräuter der Gattungen:</u> Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Der synergistische Effekt der erfindungsgemäßen Wirkstoffkombinationen ist bei bestimmten Konzentrationsverhältnissen besonders stark ausgeprägt. Jedoch kann das Gewichtsverhältnis der Wirkstoffe (I) und (II) in einem relativ großen Bereich variiert werden. Im allgemeinen entfallen auf 1 Gewichtsteil Wirkstoff (I) 0,01 - 1 Gewichtsteil, vorzugsweise 0,02 - 0,5 Gewichtsteile Wirkstoff (II).

Die erfindungsgemäßen Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensionskonzentrate, Emulsionskonzentrate, Wirkstoffimprägnierte Natur- und synthetische Stoffe, ferner Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

In den Formulierungen können als weitere Zusätze Farbstoffe wie anorganische Pigmente, z.B. Eisenoxid, Titanoxid, Ferrocyanblau und organische Farbstoffe wie Alizarin-, Azo-, Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffkombination, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch als Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Rübenherbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke kann es ferner vorteilhaft sein, in die Formulierungen als weitere Zusatzstoffe pflanzenverträgliche mineralische oder vegetabilische Öle (z.B. das Handelspräparat "Sun Oil 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen Sprühen, Stäuben oder Streuen.

Die Aufwandmengen der erfindungsgemäßen Wirkstoffkombinationen können in einem gewissen Bereich variiert werden; sie hängen u.a. vom Wetter und von den Bodenfaktoren ab. Im allgemeinen liegen die Aufwandmengen zwischen 0,1 und 20 kg Wirkstoffkombination pro ha, vorzugsweise zwischen 0,2 und 10 kg/ha.

Die erfindungsgemäßen Wirkstoffkombinationen können sowohl vor als auch nach dem Auflaufen der Pflanzen appliziert werden. Die Anwendung wird vorzugsweise nach dem Auflaufen der Pflanzen, also im post-emergence-Verfahren, vorgenommen.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen eine sehr breite Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R., "Calculating synergistic and antagonistic responses of herbicide combinations", Weeds 15, Seiten 20-22, 1967):

Wenn X = % Schädigung durch Herbizid A bei p kg/ha Aufwandmenge und
Y = % Schädigung durch Herbizid B bei q kg/ha Aufwandmenge und
E = die erwartete Schädigung der Herbizide A und B, bei p und q kg/ha Aufwandmenge,

dann ist $E = X + Y - \frac{X \cdot Y}{100}$.

Ist die tatsächliche Schädigung größer als berechnet, so ist die Kombination in ihrer Wirkung überadditiv, d.h. sie zeigt einen synergistischen Effekt.

Aus den nachfolgenden Beispielen geht hervor, daß die gefundene herbizide Wirkung der erfindungsgemäßen Wirkstoffkombinationen bei den Unkräutern größer ist als die berechnete, d.h., daß die neuen Wirkstoffkombinationen synergistisch wirken.

Beispiel A

Post-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff bzw. Wirkstoffkombination mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben so, daß die in der Tabelle angegebenen Wirkstoffmengen pro Flächeneinheit ausgebracht werden. Die Konzentration der Spritzbrühe wird so gewählt, daß in 2000 l Wasser/ha die in der Tabelle angegebenen Wirkstoffmengen ausgebracht werden. Nach drei Wochen wird der Schädigungsgrad der Pflanzen bonititert in % Schädigung im Vergleich zur Entwicklung der unbehandelten Kontrolle. Es bedeuten:

0 % = keine Wirkung (wie unbehandelte Kontrolle)
100 % = totale Abtötung

Wirkstoffe, Aufwandmengen und Resultate gehen aus der nachfolgenden Tabelle A hervor:

Tabelle A

post-emergence-Test / Gewächshaus

| Wirkstoff bzw. Wirkstoffkombination | Aufwandmenge kg/ha | Wirkung bzw. Schädigung in % | | | | | |
|---|---|---|---|---|---|---|---|
| | | Mercurialis | | Galium | | Zuckerrüben | |
| | | gef.* | ber.* | gef.* | ber.* | gef.* | ber.* |
| (I) - bekannt - | 3,5 | 0 | | 75 | | 0 | |
| (IIa) - bekannt - | 0,25 | 70 | | 10 | | 0 | |
| (I) und (IIa) - erfindungsgemäß - | 3,5 + 0,25 | 100 | 70 | 99 | 77,5 | 0 | 0 |

(I) = Metamitron

(IIa) = 2-Acetamido-3-isopropylamino-1,4-naphthochinon

* gef. = gefundene Schädigung (in Prozent)

* ber. = nach der COLBY-Formel berechnete Schädigung (in Prozent)

Patentansprüche

1) Herbizides Mittel, gekennzeichnet durch einen Gehalt an einer Wirkstoffkombination bestehend aus

(1) 4-Amino-3-methyl-6-phenyl-1,2,4-triazin-5(4H)-on (Metamitron) der Formel I

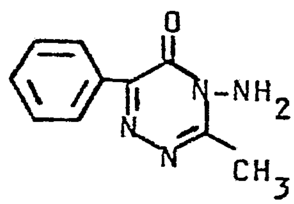

(I)

und

(2) einem 2-Acylamido-3-isopropylamino-1,4-naphthochinon der Formel II

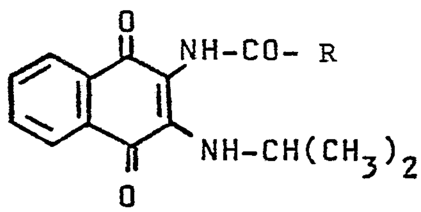

(II)

worin R für $CH_3$ (IIa) oder $C_2H_5$ (IIb) steht.

2) Herbizides Mittel nach Anspruch 1, dadurch gekennzeichnet, daß in der Wirkstoffkombination das Gewichtsverhältnis von Wirkstoff der Formel (I) zu Wirkstoff der Formel (II) zwischen 1 : 0,01 und 1 : 1, vorzugsweise zwischen 1 : 0,02 und 1 : 0,5 liegt.

3) Verfahren zur selektiven Unkrautbekämpfung in Rübenkulturen, dadurch gekennzeichnet, daß man eine Wirkstoffkombination gemäß Anspruch 1 auf die Rübenfelder einwirken läßt.

4) Verwendung einer Wirkstoffkombination gemäß Anspruch 1 zur selektiven Unkrautbekämpfung in Rübenkulturen.

5) Verfahren zur Herstellung von herbiziden Mitteln, dadurch gekennzeichnet, daß man eine Wirkstoffkombination gemäß Anspruch 1 mit Streckmitteln und/ oder oberflächenaktiven Mitteln vermischt.

Europäisches Patentamt

# EUROPÄISCHER RECHERCHENBERICHT

0087054
Nummer der Anmeldung

EP 83 10 1162

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 185 034 (BAYER)<br>--- | 1-5 | A 01 N 43/64 //<br>(A 01 N 43/64<br>A 01 N 37/24 ) |
| A,D | DE-A-2 049 468 (SHELL)<br>----- | 1-5 | |
| | | | RECHERCHIERTE SACHGEBIETE (Int. Cl. 3) |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 17-05-1983 | DECORTE D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82